# EUROPÄISCHE PATENTSCHRIFT

(11) **EP 0 635 332 B1**
(45) Veröffentlichungstag und Bekanntmachung des Hinweises auf die Patenterteilung: **12.02.1997**
(21) Anmeldenummer: 94111457.1
(22) Anmeldetag: 22.07.1994
(51) Int. Cl.: B23Q 1/00

(54) **Werkzeugkopf**
Tool head
Tête d'outil

(30) Priorität: 24.07.1993 DE 4324952
(43) Veröffentlichungstag der Anmeldung: 25.01.1995
(73) Patentinhaber: Oesterle, Hermann, 72202 Nagold (DE); Löb, Klaus-Dieter, D-72224 Ebhausen-Ebershardt (DE)
(72) Erfinder: Oesterle, Hermann, 72202 Nagold (DE); Löb, Klaus-Dieter, D-72224 Ebhausen-Ebershardt (DE)
(74) Vertreter: Grosse, Rainer, Dipl.-Ing.

(56) Entgegenhaltungen:
- EP-A- 0 340 026
- GB-A- 2 168 627
- US-A- 2 946 244
- US-A- 3 028 771
- US-A- 3 609 931

## Beschreibung

Die Erfindung betrifft einen Werkzeugkopf zur Aufnahme von Werkzeugen und/oder Werkzeughaltern gemäß Oberbegriff des Anspruchs 1.

Werkzeugköpfe der hier angesprochenen Art sind bekannt. So offenbart die Druckschrift US 3,609,931 beispielsweise einen Werkzeugkopf mit einem zentralen Kühlmittelkanal. Es hat sich gezeigt, daß insbesondere bei Einsatz derartiger Werkzeugköpfe in CNC-Maschinen die Kühlmittelzufuhr häufig hinderlich ist. Sie führt einerseits dazu, daß die Werkzeugköpfe relativ groß bauen, andererseits geschieht es in vielen Fällen, daß die Beweglichkeit der eingesetzten Werkzeuge durch die Kühlmittelzufuhr beschränkt wird. Darüber hinaus sind Unregelmäßigkeiten bei der Kühlmittelzufuhr nicht zu erkennen.

Es ist daher Aufgabe der Erfindung, einen Werkzeugkopf mit einer der Kühlung und/oder Schmierung des Werkzeugs dienenden Kühlmittelzufuhr zu schaffen, die einerseits gut abgedichtet ist und andererseits eine Leckageanzeige aufweist.

Diese Aufgabe wird bei einem Werkzeugkopf der eingangs genannten Art mit Hilfe der im kennzeichnenden Teil des Anspruchs 1 aufgeführten Merkmale gelöst.

Bevorzugt wird ein Ausführungsbeispiel des Werkzeugkopfes, bei dem ein sich zwischen den die Hauptlast der Werkzeugspindel aufnehmenden Lagern öffnender zweiter Abschnitt des Kühlmittelkanals vorgesehen ist, der mit dem ersten Abschnitt des Kühlmittelkanals in Fluidverbindung steht. Die Kanäle sind durch in die Werkzeugspindel eingebrachte Bohrungen realisierbar, das heißt, der Werkzeugkopf ist preiswert herstellbar. Dabei besteht die Möglichkeit, die Lage der Kanalabschnitte an die Gegebenheiten des Werkzeugkopfes anzupassen. Es ist sogar möglich, bestehende Spindeln nachträglich mit derartigen Kanalabschnitten zu versehen, das heißt, mit einer Kühlmittelzufuhr nachzurüsten.

Ein weiteres bevorzugtes Ausführungsbeispiel des Werkzeugkopfes zeichnet sich dadurch aus, daß die erste Dichtungseinrichtung zwei in einem Abstand zueinander angeordnete Dichtringe umfaßt, in deren Zwischenraum der zweite Abschnitt des Kühlmittelkanals mündet. In den Kühlmittelkanal eingebrachtes Kühl- und/oder Schmiermittel kann sich also -in axialer Richtung gesehen- nicht ungewollt ausdehnen und den Werkzeugkopf schädigen. Dabei ist die Zufuhr des Kühlmittels auf einfache Weise möglich.

Weitere Ausgestaltungen der Erfindung ergeben sich aus den übrigen Unteransprüchen. Allen Ausführungsformen ist gemeinsam, daß der Werkzeugkopf sehr kompakt ist und kaum größer baut als Werkzeugköpfe ohne Kühlmittelzufuhr. Daher können Werkzeugköpfe der hier angesprochenen Art in automatischen Werkzeugzentren eingebaut werden, ohne daß sich benachbarte Werkzeugköpfe behindern oder einen besonders großen Einbauraum bräuchten.

Die Erfindung wird im folgenden anhand der Zeichnungen näher erläutert. Es zeigen:
- Figur 1: einen Längsschnitt durch einen Werkzeugkopf zur besseren Verständlichkeit des nachfolgenden Ausführungsbeispiels, und
- Figur 2: einen Längsschnitt durch ein Ausführungsbeispiel eines Werkzeugkopfes.

Die im folgenden dargestellten Werkzeugköpfe werden lediglich beispielhaft erläutert. Es kommt letztlich nicht auf die genaue Ausgestaltung des Gehäuses des Werkzeugkopfes an, in dessen Inneren eine Werkzeugspindel drehbar gelagert ist. Auch die Ausgestaltung der Werkzeugaufnahme beziehungsweise der Aufnahme für Werkzeughalter ist für den Grundgedanken der Erfindung nicht wesentlich.

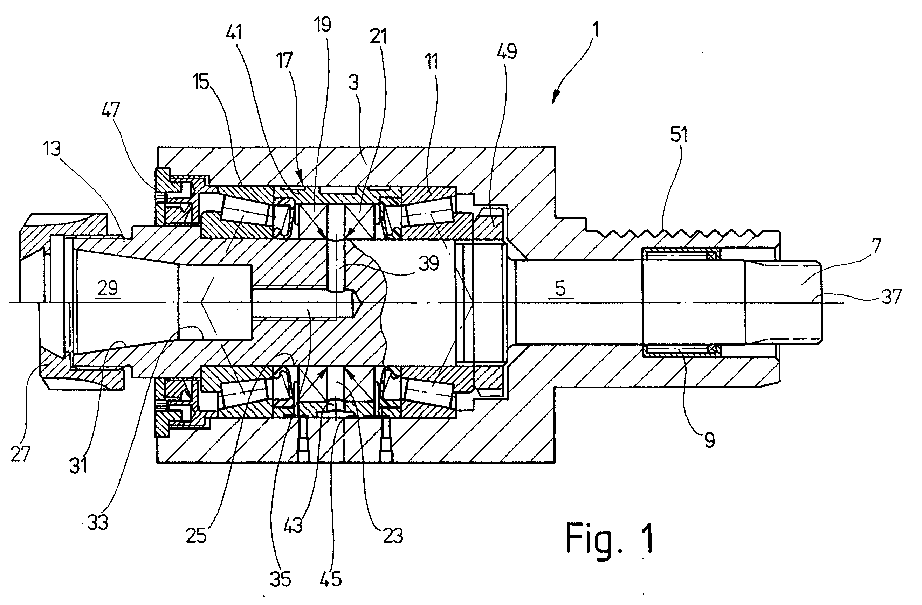

Der in Figur 1 wiedergegebene Werkzeugkopf 1 weist ein Gehäuse 3 auf, in dessen Inneren eine Werkzeugspindel 5 drehbar gelagert ist. An dem in Figur 1 rechten Ende der Werkzeugspindel 5 kann auf geeignete Weise ein Antrieb angreifen, der die Werkzeugspindel in Rotation versetzt. Hier ist zur besseren Abstützung der Werkzeugspindel noch eine Lagereinrichtung 9 vorgesehen. Die Hauptlast der Werkzeugspindel wird von einem dem rechten Ende 7 näher liegenden ersten Lager 11 und von einem in einem Abstand dazu angeordneten, näher am linken Ende 13 der Werkzeugspindel 5 liegenden zweiten Lager 15 aufgenommen. Bei der hier dargestellten Ausführungsform des Werkzeugkopfes sind beispielhaft Kegelrollenlager vorgesehen.

In dem Zwischenraum zwischen dem ersten Lager 11 und dem zweiten Lager 15 ist eine erste Dichtungseinrichtung 17 vorgesehen, die zwei in einem Abstand zueinander angeordnete Dichtringe 19 und 21 aufweist. Der Zwischenraum zwischen den Dichtringen bildet quasi einen ersten Ringkanal 23, der die Umfangsfläche 25 der Werkzeugspindel 5 umgibt.

Am linken Ende 13 der Werkzeugspindel 5 ist eine Spannmutter 27 erkennbar, die der Befestigung eines Werkzeugs und/oder eines Werkzeughalters an der Werkzeugspindel 5 dient. Im oberen Teil der Längsschnittdarstellung ist die Spannmutter 27 im gelösten, im unteren Teil im festgeschraubten Zustand dargestellt. Zum linken Ende 13 hin öffnet sich ein Aufnahmeraum 29 für den Werkzeugschaft, der einen ersten sich konisch zum linken Ende öffnenden Bereich 31 und einen sich daran anschließenden zweiten Bereich 33 mit zylindrischer Außenwand aufweist. In den zweiten Bereich 33 öffnet sich ein in Längsrichtung der Werkzeugspindel 5 verlaufender erster Abschnitt 35 eines Kühlmittelkanals, der durch eine Sackbohrung realisiert ist. Die Mittelachse des ersten Abschnitts 35 des Kühlmittelkanals, der im folgenden kurz erster Kühlmittelkanal 35 genannt wird, fällt hier mit der Mittelachse 37 der Werkzeugspindel 5 zusammen. Der erste Kühlmittelkanal 35 wird von einem zweiten Abschnitt 39 des Kühlmittelkanals, im folgenden als zweiter Kühlmittelkanal 39 bezeichnet, geschnitten, der durch eine im wesentlichen radial, das heißt senkrecht zur Mittelachse 37, verlaufende Bohrung realisiert ist. Die Dichtungsringe 19 und 21 der ersten Dichtungseinrichtung 17 sind so beabstandet, daß sich die Mündung des zweites Kühlmittelkanals 39 in dem ersten Ringkanal 23 zwischen den Dichtringen öffnet.

Der erste Ringkanal 23 wird über eine in eine der ersten Dichtungseinrichtung 17 zugeordnete Dichtungshalterung 41 eingebrachte Verbindungsbohrung 43, die zu einem zweiten Ringkanal 45 führt, mit dem Kühl- und/oder Schmiermittel versorgt. In den zweiten Ringkanal 45 mündet an einer beliebigen Umfangsstelle ein das Gehäuse 3 durchdringender Versorgungskanal, der bei dem hier dargestellten Schnitt nicht ersichtlich ist.

Die beiden Lager 11 und 15 werden von einem in die linke Stirnseite des Gehäuses 3 eingebrachten Gewindering 47 und von einem rechts vom ersten Lager 11 vorgesehenen Spannring 49 sicher gehalten.

Das Gehäuse 3 weist auf seiner rechten Seite einen Befestigungsansatz 51 auf, der der Befestigung des Werkzeugkopfes 1 in einer Werkzeugmaschine beziehungsweise in einem Bearbeitungszentrum dient. Die Ausgestaltung dieses Befestigungsansatzes kann auf beliebige, bekannte Weise erfolgen.

Der Längsschnitt gemäß Figur 1 zeigt deutlich, daß die Kühlmittelzufuhr, die über den zweiten Ringkanal 45, die Verbindungbohrung 43, den ersten Ringkanal 23 zum zweiten Kühlmittelkanal 39 und von dort zum ersten Kühlmittelkanal 35 erfolgt, sehr raumsparend ausgebildet ist. Das Kühl- und/oder Schmiermittel gelangt ohne weiteres vom ersten Kühlmittelkanal in den Aufnahmeraum 29 und kann durch einen hohlen Spannzapfen eines Werkzeugs beziehungsweise eines Werkzeughalters bis zu dem Werkzeug geführt werden.

Ein Ausführungsbeispiel eines Werkzeugkopfes ist anhand der Figur ersichtlich. Gleiche Teile sind mit gleichen Bezugsziffern versehen, so daß auf die Beschreibung gemäß Figur 1 verwiesen werden kann.

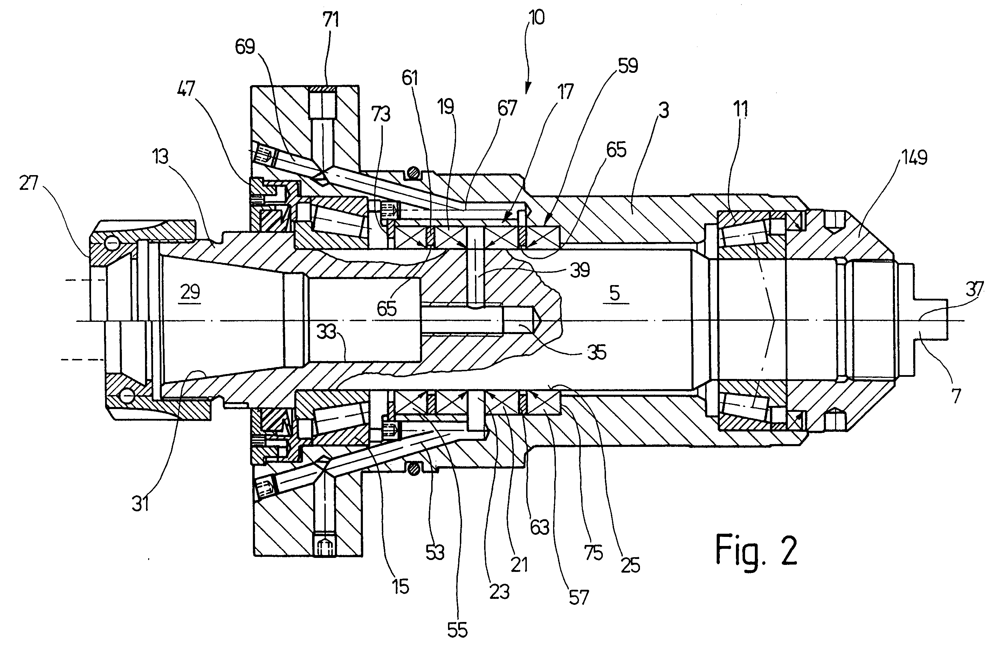

Aus Figur 2 ist ein Ausführungsbeispiel eines Werkzeugkopfs 10 ersichtlich, der auch hier in einem Längsschnitt dargestellt ist. Innerhalb eines Gehäuses 3 ist eine Werkzeugspindel 5 drehbar gelagert, an deren rechten Ende 7 ein Antrieb anschließbar ist, der die Spindel in Rotation versetzt. Die Hauptbelastung der Werkzeugspindel 5 wird von einem nahe dem rechten Ende 7 der Werkzeugspindel 5 angeordneten ersten Lager 11 und von einem Abstand dazu angeordneten, nahe dem linken Ende 13 der Werkzeugspindel 5 liegenden zweiten Lager 15 aufgefangen.

Zwischen den Lagern befindet sich eine erste Dichtungseinrichtung 17 mit zwei in einem Abstand zueinander angeordneten Dichtringen 19 und 21. Zwischen den Dichtringen entsteht dadurch ein erster Ringkanal 23, in den Kühlmittel einbringbar ist. Die Dichtringe 19 und 21 liegen dichtend auf der Umfangsfläche 25 der Werkzeugspindel 5 auf und verhindern so eine axiale Ausdehnung des Kühlmittels.

Am linken Ende 13 der Werkzeugspindel 5 ist auch hier eine Spannmutter 27 erkennbar, die in der oberen Hälfte der Darstellung gemäß Figur 1 in gelöstem und in der unteren Hälfte dieser Figur im festgezogenen Zustand gezeigt ist.

In die der Spannmutter 27 zugewandten Stirnseite der Werkzeugspindel 5 ist ein Aufnahmeraum 29 eingebracht, der in einem ersten Bereich 31 sich konisch zur Spannmutter 27 hin öffnet. Daran schließt sich ein zweiter Bereich 33 an, dessen Begrenzungswand zylindrisch ausgebildet ist. In diesen mündet ein erster Kühlmittelkanal 35, der beispielsweise durch eine Bohrung in die Werkzeugspindel 5 hergestellt ist und dessen Mittelachse hier mit der Mittelachse 37 der Werkzeugspindel zusammenfällt. In den ersten Kühlmittelkanal 35 mündet ein zweiter Kühlmittelkanal 39, der ebenfalls durch eine Bohrung realisierbar ist.

Anstelle eines konzentrisch zur Mittelachse 37 angeordneten ersten Kühlmittelkanals 35 können hier wie dem Ausführungsbeispiel gemäß Figur 1 auch mehrere nebeneinanderliegende Kanäle vorgesehen sein. Ebenso kann zusätzlich zu dem in Figur 2 -aber auch in Figur 1- dargestellten zweiten Kühlmittelkanal 39 ein oder mehrere zusätzliche radialverlaufende Kühlmittelkanäle vorhanden sein, die den ersten Ringkanal 23 mit dem ersten Kühlmittelkanal 35 verbinden.

In den ersten Ringkanal 23 wird auf geeignete Weise, hier durch in das Gehäuse 3 eingebrachte Bohrungen 53 das Kühl- und/oder Schmiermittel eingebracht.

In einem Abstand zu den Dichtringen 19 und 21 der ersten Dichtungseinrichtung 17 finden sich hier zwei in einem Abstand zueinander angeordnete Dichtringe 55 und 57 einer zweiten Dichtungseinrichtung 59. Der Abstand zwischen den beiden Dichtringen 55 und 57 ist so gewählt, daß diese die erste Dichtungseinrichtung 17 zwischen sich einschließen und in einem Abstand zu den Dichtringen 19 und 21 der ersten Dichtungseinrichtung 17 liegen. Bei dem hier dargestellten Ausführungsbeispiel sind Abstandshalter 61 und 63 vorgesehen, die dafür sorgen, daß zwischen der ersten und zweiten Dichtungseinrichtung ringförmige Entlastungskanäle 65 gebildet werden. Diese münden in einem Sammelraum 67, der hier durch eine Bohrung im Gehäuse 3 gebildet wird, deren Mittelachse in einem Abstand zur Dreh- beziehungsweise Mittelachse 37 verläuft.

Der Sammelraum 67 steht über geeignete Bohrungen 69, die in das Gehäuse 3 eingebracht sind, mit einer Anzeigeeinrichtung 71 in Fluidverbindung. Die Anzeigeeinrichtung besteht hier aus einem Verschlußstopfen, der in das Gehäuse 3 eingebracht ist. Sollte Kühlmittel unter Druck in die Entlastungskanäle 65 und damit in den Sammelraum 67 und in die Bohrungen 69 gelangen, wird der Verschlußstopfen der Anzeigeeinrichtung 71 herausgepreßt, so daß der Verwender des Werkzeugkopfs 10 erkennen kann, daß hier eine Leckage der ersten Dichtungseinrichtung 17 gegeben ist. Schäden am Werkzeugkopf 10 können deshalb nicht ohne weiteres auftreten, weil die zweite Dichtungseinrichtung 59 eine ungewollte axiale Ausdehnung der Flüssigkeit verhindern.

Die Dichtungseinrichtungen 17 und 59 werden durch eine geeignete Halterung 73 an einer axialen Verlagerung gehindert, die mit einer Schulter 75, an der sich die zweite Dichtungseinrichtung 59 abstützt, zusammenwirkt.

Zur Lagefixierung der Lager 11 und 13 ist auch hier ein Gewindering 47 vorgesehen, der mit einer Spannmutter 149 zusammenwirkt.

Aus der Schnittdarstellung gemäß Figur 2 ist ohne weiteres ersichtlich, daß das Kühl- und/oder Schmiermittel auf einfache Weise durch die Werkzeugspindel 5 zum Aufnahmeraum 29 gefördert werden kann, so daß es über einen hohlen Schaft des Werkzeugs beziehungsweise der Werkzeugaufnahme bis hin zum Werkzeug transportiert werden kann. Besonders deutlich wird, daß sich die Baumaße des Werkzeugkopfes 10 durch die Kühlmittelzufuhr nicht zu ändern brauchen. Dieser ist also ebenso kompakt auszubilden wie ein Werkzeugkopf gleicher Bauart, der allerdings keine Kühlmittelzufuhr aufweist.

Sollte aufgrund eines Defektes die erste Dichtungseinrichtung 17 von dem unter Überdruck stehenden Kühl- und/oder Schmiermittel überwunden werden, gelangt die Flüssigkeit in die durch den Abstand zwischen den Dichtungsringen der ersten Dichtungseinrichtung 17 und der zweiten Dichtungseinrichtung 59 gebildeten Entlastungskanäle 65 und von dort über den Sammelraum 67 und die Bohrungen 69 zu der Anzeigeeinrichtung 71. Der Sammelraum 67 kann auch an eine beliebige Auffang- oder Rückführeinrichtung angeschlossen sein. Wesentlich ist, daß die Anzeigeeinrichtung 71 Flüssigkeit in den Entlastungskanälen 65 anzeigt. Anstelle eines Verschlußstopfens kann auch hier ein Flüssigkeitssensor vorgesehen sein, der mit einer Warneinrichtung beziehungsweise überwachungsschaltung zusammenwirkt. Selbst wenn Flüssigkeit die erste Dichtungseinrichtung 17 überwindet, bleibt die. Lagerung der Werkzeugspindel 5 vor Schäden bewahrt, weil die zweite Dichtungseinrichtung 59 einen flüssigkeitsdichten Abschluß zur Umgebung darstellt.

Es zeigt sich auch, daß letztlich die Anzahl der Dichtringe der Dichtungseinrichtungen und die Lager für die Funktion der Kühlmittelzufuhr und deren Abdichtung belanglos ist. Es kann also außer durch die Lager 11 und 15 eine weitere Abstützung der Werkzeugspindel 5 über weitere Lagerstellen vorgesehen sein.

## Patentansprüche

1. Werkzeugkopf zur Aufnahme von Werkzeugen und/oder Werkzeughaltern, mit einer Werkzeugspindel, mindestens zwei die in Rotation versetzbare Werkzeugspindel unterstützenden Lager und mit einer der Kühlung und/oder Schmierung des Werkzeuges dienenden Kuhlmittelzufuhr, die wenigstens einen die Werkzeugspindel durchdringenden, der Kühlmittelzufuhr dienenden Kühlmittelkanal aufweist, dessen an einer Umfangsflache der Werkzeugspindel liegende Mündung mittels einer ersten Dichtungseinrichtung gegenüber den Lagern abgedichtet ist, **dadurch gekennzeichnet**, daß eine zweite Dichtungseinrichtung (59) vorgesehen ist, die mindestens zwei in einem Abstand zueinander angeordnete Dichtringe (55, 57) aufweist, zwischen denen die erste Dichtungseinrichtung (17) angeordnet ist, und daß zwischen der ersten Dichtungseinrichtung (17) und der zweiten Dichtungseinrichtung (59) jeweils ein Entlastungskanal (65) vorgesehen ist, der mit einer eine Leckage anzeigenden Anzeigeeinrichtung (71) zusammenwirkt.

2. Werkzeugkopf nach Anspruch 1, **dadurch gekennzeichnet**, daß der Kühlmittelkanal (35,39) zwei Abschnitte (35;39) aufweist, wobei sich der zweite Abschnitt (39) zwischen den die Werkzeugspindel (5) tragenden Lagern (11;15) öffnet.

3. Werkzeugkopf nach Anspruch 1 oder 2, **dadurch gekennzeichnet,** daß die Mittelachse des ersten Abschnitts (35) des Kühlmittelkanals mit der Mittelachse (37) der Werkzeugspindel (5) zusammenfällt.

4. Werkzeugkopf nach Anspruch 1 oder 2, **dadurch gekennzeichnet**, daß der erste Abschnitt (35) des Kühlmittelkanals im wesentlichen parallel zur Drehachse (37) der Werkzeugspindel (5) verläuft.

5. Werkzeugkopf nach einem der vorhergehenden Ansprüche, **dadurch gekennzeichnet**, daß der zweite Abschnitt (39) des Kühlmittelkanals mehrere die Umfangsfläche (25) der Werkzeugspindel (5) durchbrechende, in den ersten Abschnitt (35) des Kühlmittelkanals mündende Kanalabschnitte aufweist.

6. Werkzeugkopf nach einem der Ansprüche 2 bis 5, **dadurch gekennzeichnet,** daß der zweite Abschnitt (39) des Kühlmittelkanals senkrecht zur Mittelachse (37) der Werkzeugspindel (5) verläuft.

7. Werkzeugkopf nach einem der vorhergehenden Ansprüche, **dadurch gekennzeichnet**, daß die erste Dichtungseinrichtung (17) mindestens zwei in einem Abstand zueinander angeordnete Dichtringe (19,21) umfaßt, und daß die Mündung des zweiten Abschnitts (39) des Kühlmittelkanals zwischen den Dichtringen (19,21) liegt.

8. Werkzeugkopf nach Anspruch 7, **dadurch gekennzeichnet,** daß durch die in einem Abstand zueinander angeordneten Dichtringe (19,21) der ersten Dichtungseinrichtung (17) ein Ringkanal (23) ausgebildet wird, in den das Kühl- und/oder Schmiermittel eingespeist wird.

## Claims

1. A tool head for receiving tools and/or tool holders, having a tool spindle, at least two bearings supporting the tool spindle which can be set in rotation, and having a cooling agent feed which serves to cool and/or lubricate the tool and which has at least one cooling agent channel which penetrates the tool spindle, serves to feed the cooling agent and whose mouth located at a circumferential surface of the tool spindle is sealed relative to the bearings by means of a first sealing device, characterised in that a second sealing device (59) is provided and has at least two sealing rings (55, 57) which are arranged at a distance from one another and between which the first sealing device (17) is arranged, and in that a discharge channel (65) is provided between the first sealing device (17) and the second sealing device (59) in each case and co-operates with an indicating device (71) indicating a leakage.

2. A tool head in accordance with Claim 1, characterised in that the cooling agent channel (35, 39) has two portions (35; 39), the second portion (39) opening between the bearings (11; 15) supporting the tool spindle (5).

3. A tool head in accordance with Claim 1 or 2, characterised in that the central axis of the first portion (35) of the cooling agent channel coincides with the central axis (37) of the tool spindle (5).

4. A tool head in accordance with Claim 1 or 2, characterised in that the first portion (35) of the cooling agent channel extends substantially parallel to the rotational axis (37) of the tool spindle (5).

5. A tool head in accordance with any one of the preceding Claims, characterised in that the second portion (39) of the cooling agent channel has a plurality of channel portions which breach the circumferential surface (25) of the tool spindle (5) and which issue into the first portion (35) of the cooling agent channel.

6. A tool head in accordance with any one of Claims 2 to 5, characterised in that the second portion (39) of the cooling agent channel extends perpendicularly to the central axis (37) of the tool spindle (5).

7. A tool head in accordance with any one of the preceding Claims, characterised in that the first sealing device (17) comprises at least two sealing rings (19, 21) arranged at a distance from one another, and in that the mouth of the second portion (39) of the cooling agent channel lies between the sealing rings (19, 21).

8. A tool head in accordance with Claim 7, characterised in that an annular channel (23) is formed through the sealing rings (19, 21) of the first sealing device (17) which are arranged at a distance from one another, the cooling agent and/or lubricant being fed into this annular channel (23).

## Revendications

1. Tête d'outil destinée à recevoir des outils et/ou des porte-outils, comprenant une broche d'outil et au moins deux paliers supportant la broche d'outil qui peut être mise en rotation, ainsi qu'une amenée de fluide de refroidissement, celle-ci servant au refroidissement et/ou a la lubrification de l'outil et comportant au moins un canal à fluide de refroidissement qui traverse la broche de l'outil, qui sert à l'amenée du fluide de refroidissement et dont l'embouchure située sur une surface du pourtour de la broche de l'outil peut être rendue étanche par rapport aux paliers au moyen d'un premier dispositif d'étanchéité, caractérisée par le fait qu'il est prévu un deuxième dispositif d'étanchéité (59), lequel comporte au moins deux bagues d'étanchéité (55, 57) qui sont disposées à distance l'une de l'autre et entre lesquelles est disposé le premier dispositif d'étanchéité (17), et par le fait qu'il est prévu à chaque fois entre le premier dispositif d'étanchéité (17) et le deuxième dispositif d'étanchéité (59) un canal de décharge (65) qui coopère avec un dispositif indicateur (71), celui-ci signalant la présence d'une fuite.

2. Tête d'outil selon la revendication 1, caractérisée par le fait que le canal a fluide de refroidissement (35, 39) comporte deux parties (35 ; 39), la deuxième partie (39) s ouvrant entre les paliers (11 ; 15) qui portent la broche (5) de l'outil.

3. Tête d'outil selon la revendication 1 ou 2, caractérisée par le fait que l'axe central de la première partie (35) du canal à fluide de refroidissement coïncide avec l'axe central (37) de la broche (5) de l'outil.

4. Tête d'outil selon la revendication 1 ou 2, caractérisée par le fait que la première partie (35) du canal à fluide de refroidissement s'étend pour l'essentiel parallèlement à l'axe de rotation (37) de la broche (5) de l'outil.

5. Tête d'outil selon l'une des revendications précédentes, caractérisée par le fait que la deuxième partie (39) du canal à fluide de refroidissement comporte plusieurs parties de canal qui traversent la surface (25) du pourtour de la broche (5) de l'outil et qui débouchent dans la première partie (35) du canal à fluide de refroidissement.

6. Tête d'outil selon l'une des revendications 2 à 5, caractérisée par le fait que la deuxième partie (39) du canal à fluide de refroidissement s'étend perpendiculairement à l'axe central (37) de la broche (5) de l'outil.

7. Tête d'outil selon l'une des revendications précédentes, caractérisée par le fait que le premier dispositif d'étanchéité (17) comporte au moins deux bagues d'étanchéité (19, 21) qui sont disposées & distance l'une de l'autre, et par le fait que l'embouchure de la deuxième partie (39) du canal à fluide de refroidissement est située entre les bagues d'étanchéité (19, 21).

8. Tête d'outil selon la revendication 7, caractérisée par le fait que les bagues d'étanchéité (19, 21) du premier dispositif d'étanchéité (17) disposées à distance entre elles forment un canal annulaire (23) dans lequel est amené le fluide de refroidissement et/ou de lubrification.
